# FASCICULE DE BREVET EUROPEEN

(11) **EP 2 674 334 B1**
(45) Date de publication et mention de la délivrance du brevet: **23.03.2016**
(21) Numéro de dépôt: 13171597.1
(22) Date de dépôt: 12.06.2013
(51) Int. Cl.: B60R 21/215, B60R 21/2155

(54) **Dispositif d'obturation d'un module de coussin gonflable comprenant une zone formant charnière de longueur variable**
Abdeckung für eine Airbag-Baugruppe mit einem in einem Bereich bildenden Scharnier mit variabler Länge
Cover of an airbag module having an area forming an hinge with variable lenght

(30) Priorité: 15.06.2012 FR 1255625
(43) Date de publication de la demande: 18.12.2013
(73) Titulaire: Faurecia Intérieur Industrie, 92000 Nanterre (FR)
(72) Inventeur: Schupbach, Thierry, 60149 SAINT CREPIN IBOUVILLIERS (FR); Edeline, Franck, 60590 LE VAUMAIN (FR)
(74) Mandataire: Domenego, Bertrand

(56) Documents cités:
- EP-A1- 1 800 971
- EP-A1- 2 322 390
- EP-A2- 1 403 148
- DE-A1- 19 940 984
- US-A1- 2010 109 296

## Description

La présente invention concerne un dispositif d'obturation d'un module de coussin gonflable, du type comprenant un cadre, comprenant au moins une paroi définissant une trajectoire de déploiement du coussin gonflable et une ouverture supérieure s'étendant à l'extrémité de ladite paroi, et un couvercle recouvrant au moins une partie de l'ouverture supérieure et mobile par rapport au cadre de sorte à dégager l'ouverture supérieure et permettre le déploiement du coussin gonflable selon la trajectoire de déploiement au travers de l'ouverture supérieure, le couvercle étant fixée à la paroi par une zone formant charnière.

Un tel dispositif d'obturation est généralement obtenu par moulage par injection. Ainsi, le cadre et le couvercle sont formés à partir d'une même matière plastique.

Le couvercle est délimité par une fente grâce à laquelle la majorité de son pourtour est espacée du contour interne du cadre. Le couvercle est alors relié au cadre par seulement quelques points de liaison formant une charnière et permettant l'ouverture du couvercle en rotation par rapport au cadre sous l'effet du déploiement du coussin gonflable.

Un tel dispositif est généralement destiné à être fixé à une plaque de support d'un élément de garnissage de véhicule automobile. La plaque est par exemple recouverte d'une couche de mousse, elle-même recouverte d'une peau pour former l'élément de garnissage, tel qu'une planche de bord, un panneau de porte ou autre et comprend des affaiblissements permettant de libérer un passage pour le coussin gonflable lors de son déploiement.

Il est connu de réaliser une charnière continue s'étendant sur toute la longueur du couvercle. Cependant, les efforts nécessaires pour entraîner la rotation du couvercle par rapport au cadre sont importants et peuvent perturber le déploiement du coussin gonflable.

Pour pallier cet inconvénient et réduire ces efforts, la charnière peut être formée en plusieurs parties séparées les unes des autres, ce qui facilite l'ouverture du dispositif d'obturation et augmente la vitesse de déploiement du coussin gonflable. Cependant, ces différentes parties sont plus fragilises individuellement qu'une charnière continue de grande longueur. Les risques de rupture de la charnière lors du déploiement du coussin gonflable sont alors augmentés. Cette rupture peut entraîner une séparation du couvercle par rapport au cadre, ce qui constitue un danger, ou créer des bords coupant susceptibles de crever le coussin gonflable.

Pour réduire ces risques, il est connu de prévoir une charnière apte à s'allonger lors de la rotation du couvercle, comme décrit dans le document EP-1 410 958 par exemple. Une telle charnière présente par exemple une zone dont la section est en forme de U, ce U se déployant lors du déploiement de l'airbag de sorte à allonger la charnière.

Cependant, même avec une telle possibilité d'élongation de la charnière, celle-ci est toujours susceptible de se rompre et de former un risque pour la sécurité des passagers du véhicule. Ceci est particulièrement vrai au niveau des bords latéraux du couvercle où la charnière est soumise à plus de contraintes lors du déploiement du coussin gonflable. En effet, on a constaté, lors de ce déploiement, que le couvercle a tendance à se déformer au cours de sa rotation jusqu'à entraîner une traction plus importante sur les parties latérales de la charnière.

Le document EP 2 322 390 A montre un dispositif d'obturation selon le préambule de la revendication 1.

L'un des buts de l'invention est de pallier cet inconvénient en proposant un dispositif d'obturation dont le comportement, lors du déploiement du coussin gonflable, est amélioré, notamment dont les risques de rupture de la charnière sont réduits.

A cet effet, l'invention concerne un dispositif d'obturation du type précité, dans lequel la zone formant charnière comprend au moins une charnière centrale reliant une partie centrale du couvercle au cadre, et au moins une charnière latérale reliant une partie latérale du couvercle au cadre, la charnière latérale présentant une longueur supérieure à la longueur de la charnière centrale, la charnière centrale et la charnière latérale comprennent chacune une partie de jonction au cadre, une partie de déploiement et une partie de jonction au couvercle, la partie de déploiement s'étendant à l'intérieur du canal de tir et la partie de jonction s'étendant au droit de la paroi, la longueur de la partie de jonction au cadre de la charnière latérale étant supérieure à la longueur de la partie de jonction au cadre de la charnière centrale.

Le fait de prévoir une charnière latérale plus longue que la charnière centrale permet d'augmenter l'aptitude de cette charnière latérale à s'allonger et ainsi résister aux efforts plus importants exercés sur elle lors du déploiement du coussin gonflable. On diminue ainsi les risques de rupture de la charnière lors du déploiement du coussin gonflable.

Selon d'autres caractéristiques du dispositif d'obturation selon l'invention :
- le cadre, le couvercle et la zone formant charnière sont réalisés d'une seule pièce ;
- le cadre comprend une partie de fixation à un support, ladite partie de fixation s'étendant autour de l'ouverture supérieure sensiblement dans le plan de ladite ouverture supérieure et étant fixée à la paroi ;
- la charnière centrale, la paroi et la partie de fixation se rejoignent en une zone de jonction s'étendant sensiblement dans le plan de l'ouverture supérieure ;
- la charnière latérale, la paroi et la partie de fixation se rejoignent en une zone de jonction s'étendant sensiblement dans un plan décalé par rapport au plan de l'ouverture supérieure, de sorte à augmenter la longueur de la charnière latérale ;
- la partie de fixation comprend un décrochement en regard de la charnière latérale, ledit décrochement s'étendant sensiblement du plan de l'ouverture supérieure à la zone de jonction de la charnière latérale à la paroi et à la partie de fixation, ledit décrochement étant relié à ladite zone de jonction ;
- les parties de déploiement de la charnière centrale et de la charnière latérale présentent chacune une section sensiblement en forme de U ;
- la charnière centrale et la charnière latérale sont séparées l'une de l'autre par un espace, le couvercle n'étant pas relié à la paroi en regard de cet espace ;
- la paroi comprend une zone affinée s'étendant en regard de l'espace jusque dans le plan de l'ouverture supérieure ;
- le couvercle est relié au cadre par au moins une charnière centrale et par deux charnières latérales, lesdites charnières latérales étant disposées de part et d'autre de ladite charnière centrale.

D'autres aspects et avantages de l'invention apparaîtront à la lecture de la description qui suit, donnée à titre d'exemple et faite en référence aux dessins annexés, dans lesquels :
- la Fig. 1 est une représentation schématique de dessus d'un dispositif d'obturation selon l'invention,
- la Fig. 2 est une représentation schématique en coupe selon l'axe II-II de la Fig. 1,
- la Fig. 3 est une représentation schématique en coupe selon l'axe III-III de la Fig. 1, et
- la Fig. 4 est une représentation schématique en coupe selon l'axe IV-IV de la Fig. 1.

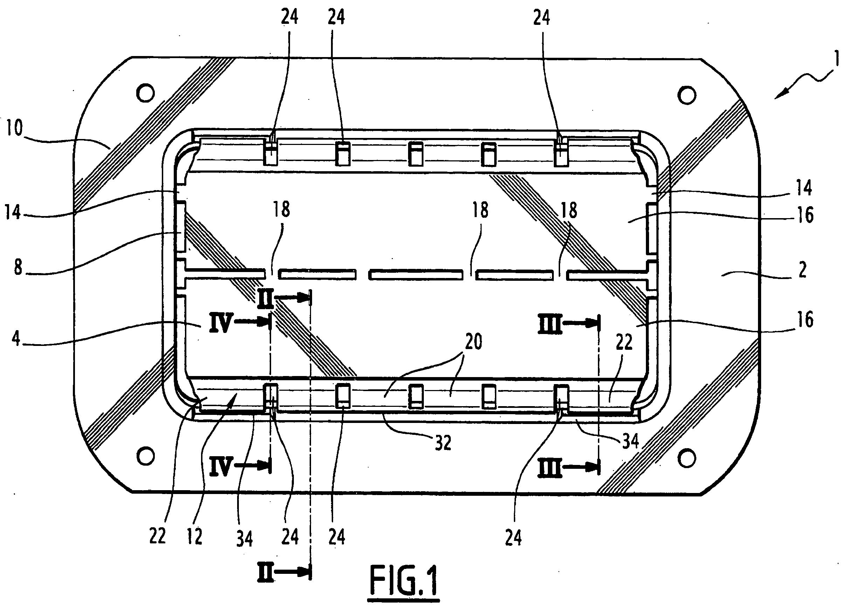

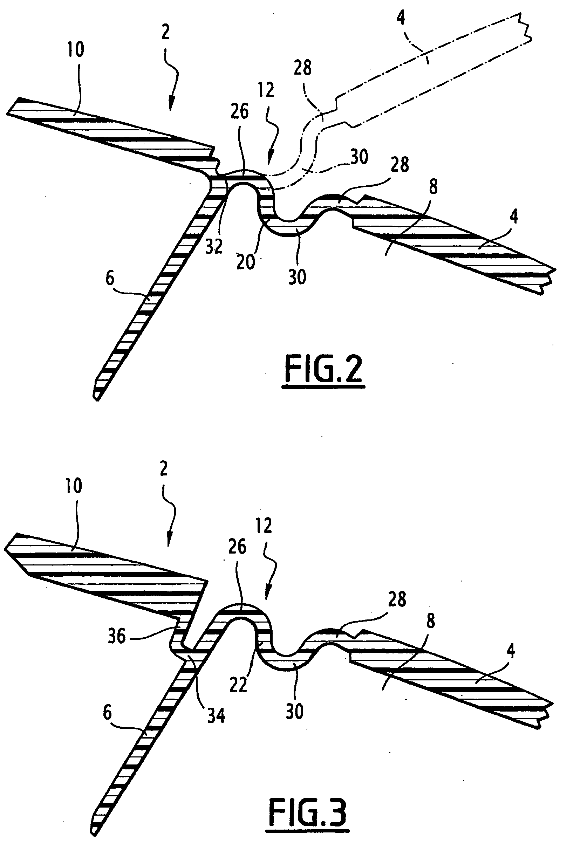

En référence aux Fig. 1 et 2, on décrit un dispositif d'obturation 1 d'un module de coussin gonflable comprenant un cadre 2 et un couvercle 4. De façon connue, un tel dispositif d'obturation 1 est par exemple destiné à être fixé sous un élément de support, d'un élément de garnissage de véhicule, tel qu'une planche de bord ou un panneau de porte ou autre. Dans la mesure où un tel élément de garnissage et la disposition d'un dispositif d'obturation dans un tel élément de garnissage sont connus, ils ne seront pas décrits en détail ici, seul le dispositif d'obturation étant décrit en détail.

Le cadre 2 comprend au moins une paroi 6, définissant une trajectoire de déploiement du coussin gonflable, c'est-à-dire formant le «canal de tir » du coussin gonflable. La paroi 6 est par exemple cylindrique de section rectangulaire, carrée ou trapézoïdale. La paroi 6 s'étend sensiblement selon la direction de déploiement du coussin gonflable et comprend, à son extrémité disposée au voisinage de l'élément de support, une ouverture supérieure 8 s'étendant dans un plan sensiblement perpendiculaire à la direction dans laquelle s'étend la paroi 6.

L'ouverture supérieure 8 est par exemple destinée à être recouverte par l'élément de support de l'élément de garnissage qui comprend, de façon connue des affaiblissements permettant à l'élément de support de s'ouvrir pour libérer un passage pour le coussin gonflable vers l'extérieur de l'élément de garnissage lors de son déploiement.

Le cadre 2 comprend en outre une partie de fixation 10 entourant tout ou partie de l'ouverture supérieure 8 et s'étendant sensiblement dans le plan de cette ouverture supérieure. La partie de fixation 10 est reliée à l'extrémité de la paroi 6 et s'étend sensiblement perpendiculairement à celle-ci. La partie de fixation 10 permet la fixation du dispositif d'obturation 1 à l'élément de support de l'élément de garnissage et est destiné à être fixé sous cet élément de support, atour des affaiblissements permettant le passage du coussin gonflable. La partie de fixation 10 est par exemple sensiblement rectangulaire, lorsque la paroi 6 est cylindrique de section rectangulaire.

Le couvercle 4 du dispositif d'obturation 1 s'étend dans l'ouverture supérieure 8 sensiblement dans le plan de celle-ci de sorte à fermer au moins en partie cette ouverture 8 lorsque le coussin gonflable est replié. Le couvercle 4 est agencé pour exercer un appui sur l'élément de support de l'élément de garnissage et entraîner sa rupture au niveau des affaiblissements lors du déploiement du coussin gonflable. Le couvercle 4 est relié, le long de l'un dé ses bords, à la paroi 6 et à la partie de fixation 10 par une zone formant charnière 12 permettant une rotation du couvercle 4 par rapport au cadre 2 lors du déploiement du coussin gonflable, de sorte que le couvercle 4 soit dégagé de l'ouverture supérieure 8 et laisse passer le coussin gonflable, comme représenté en traits pointillés sur la Fig. 2. Dans le cas d'une partie de fixation 10 sensiblement rectangulaire et d'une paroi 6 de section rectangulaire, la zone formant charnière 12 relie par exemple le couvercle 4 à l'un des grands côtés du rectangle.

Selon le mode de réalisation représenté sur la Fig. 1, le couvercle 4 peut en outre être relié au cadre 2 en d'autres points par des ponts de matière 14 frangibles, agencés pour se rompre sous l'effet de la force exercée par le coussin gonflable contre le couvercle 4 lors de son déploiement. De tels ponts de matière 14 permettent d'assurer le maintien du couvercle 4 dans l'ouverture supérieure 8 et d'éviter que ce couvercle 4 s'enfonce vers la paroi 6, par exemple si une force d'appui importante est exercée sur la surface de l'élément de garnissage en regard du couvercle 4.

Egalement selon le mode de réalisation représenté sur la Fig. 1, le couvercle 4 est réalisé en deux parties 16, reliées l'une à l'autre par des ponts de matière 18 frangibles et chacune reliée au cadre par une zone formant charnière. Dans ce mode de réalisation, le couvercle s'ouvre par rotation selon des directions opposées des deux parties lorsque le coussin gonflable appuie sur les extrémités libres de ces parties et rompt les ponts de matière 18, sensiblement au centre de l'ouverture. La zone formant charnière décrite ci-dessous s'applique aussi bien lorsque le couvercle est relié au cadre par une seule zone formant charnière que par deux zones formant charnière, ces deux zones formant charnière étant sensiblement identiques.

Le cadre 2, le couvercle 4 et la zone formant charnière 12 sont réalisés d'une seule pièce, par exemple en matériau plastique, tel qu'un élastomère. Selon un autre mode de réalisation, le cadre 2, le couvercle 4 et la zone formant charnière 12 peuvent être réalisés en deux ou plus de deux pièces fixées les unes aux autres, en un seul ou en plusieurs matériaux différents.

Selon le mode de réalisation représenté sur la Fig. 1, la zone formant charnière 12 s'étend sensiblement sur toute la longueur de l'ouverture 8 le long d'un des bords sensiblement rectilignes du couvercle 4 et du bord de la partie de fixation 10 en regard. La zone formant charnière 12 est réalisée en plusieurs parties, dont au moins une partie de charnière centrale 20, dite charnière centrale 20, reliant une partie centrale du couvercle 4 au cadre 2, et deux parties de charnière latérales 22, dites charnières latérales 22, reliant chacune une partie latérale du couvercle 4 au cadre 2 et étant disposées de part et d'autre de la charnière centrale 20. Selon le mode de réalisation représenté sur la Fig. 1, la zone formant charnière 12 comprend plusieurs charnières centrales 20, les charnières latérales 22 étant disposées chacune en regard d'une des charnières centrales 20 les plus éloignées du centre du couvercle 4. Plus particulièrement, les charnières latérales 22 sont chacune disposées au voisinage d'une des parties extrêmes de la longueur de l'ouverture 8, c'est-à-dire au voisinage d'un des « coins » du couvercle 4 lorsque l'ouverture 8 est sensiblement rectangulaire.

Les charnières centrales 20 et les charnières latérales 22 sont séparées les unes des autres par des espaces 24 s'étendant de la paroi 6 au couvercle 4 et présentant par exemple une section sensiblement rectangulaire. En regard de ces espaces 24, le couvercle 4 n'est pas lié au cadre 2. Selon le mode de réalisation représenté sur la Fig. 1, les espaces 24 sont formés par des enlèvements de matière pratiqués dans la pièce formant la zone charnière 12, et éventuellement le cadre 2 et le couvercle 4.

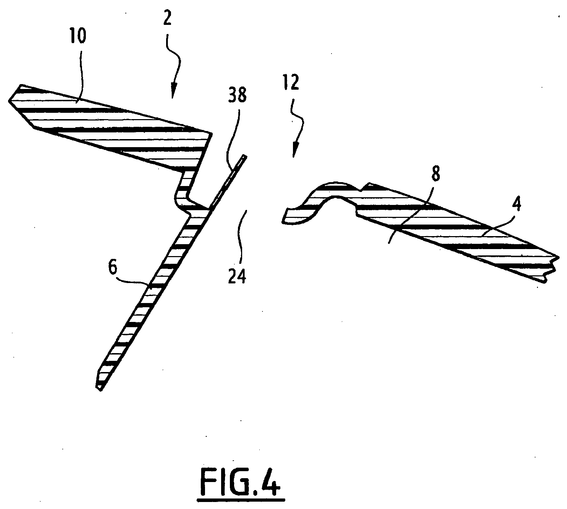

Une charnière centrale 20 est plus particulièrement visible sur la Fig. 2, une charnière latérale 22 sur la Fig. 3 et un espace 24 sur la Fig. 4.

Comme représenté sur les Fig. 2 et 3, la charnière centrale 20 et les charnières latérales 22 comprennent chacune une partie de jonction au cadre 26, reliée au cadre 2, une partie de jonction au couvercle 28, reliée au couvercle 4, et une partie de déploiement 30 joignant la partie de jonction à la paroi 26 à la partie de jonction au couvercle 28.

La partie de déploiement 30 des charnières centrales et latérales présente une section sensiblement en forme de U, c'est-à-dire que cette partie est repliée sur elle-même et est apte à s'étendre lors du déploiement du coussin gonflable par dépliage de la partie de déploiement 30, comme représenté en pointillés sur la Fig. 2. De façon connue, un tel dépliage de la partie de déploiement 30 permet de limiter les risques de rupture du couvercle 4 par rapport au cadre 2 lors du déploiement du coussin gonflable. La partie de déploiement s'étend à l'intérieur du volume défini par la paroi 6, c'est-à-dire à l'intérieur du canal de tir.

La partie de jonction au cadre 26 de chaque charnière latérale 22 présente une longueur supérieure à la partie de jonction au cadre 26 de la ou de chaque charnière centrale 20 de sorte que la longueur globale de chaque charnière latérale 22 est supérieure à la longueur globale de la ou de chaque charnière centrale 20, comme on peut le voir en comparant les Fig. 2 et 3. Le fait de prévoir une longueur de charnière plus importante pour les charnières latérales 22 permet d'améliorer son aptitude à s'allonger, c'est-à-dire que la longueur d'allongement que peut subir la charnière latérale 22 avant de se rompre est augmentée, et ainsi d'améliorer la résistance générale du couvercle 4 qui reste donc solidaire du cadre 2 lors du déploiement du coussin gonflable. La partie de jonction 26 ne s'étend pas à l'intérieur du volume défini par la paroi 6, c'est-à-dire qu'elle ne s'étend pas dans le canal de tir. En effet, la partie de jonction 26 s'étend au droit de la paroi 6 et légèrement au-dessus du volume défini par la paroi 6, comme représenté sur la figure 3.

La partie de jonction au cadre 26 de la ou de chaque charnière centrale 20 est agencée pour se joindre à la paroi 6 et à la partie de fixation 10 en une zone de jonction 32 s'étendant sensiblement dans le plan de l'ouverture supérieure 8, comme représenté sur la Fig. 2. La partie de jonction au cadre 26 de chaque charnière latérale 22 est quant à elle agencée pour se joindre à la paroi 6 et à la partie de fixation 10 en une zone de jonction 34 s'étendant dans un plan décalé par rapport au plan de l'ouverture supérieure 8, comme représenté sur la Fig. 3.

Plus particulièrement, la zone de jonction 34 de la partie de jonction au cadre 26 de chaque charnière latérale 22 s'étend sous la zone de jonction 32 de la partie de jonction au cadre 26 de la ou de chaque charnière centrale 20 de sorte à allonger la longueur de la partie de jonction au cadre 26 de chaque charnière latérale 22 par rapport à la longueur de la partie de jonction au cadre 26 de la ou de chaque charnière centrale 20. Afin d'abaisser la zone de jonction 34 de chaque charnière latérale 22, la partie de fixation 10 comprend, en regard de chaque charnière latérale 22, un décrochement 36 s'étendant sensiblement perpendiculairement à l'ouverture 8 et relié à la paroi 6 au niveau de la zone de jonction 34, comme représenté sur la Fig. 3. Le décrochement 36 s'étend donc sensiblement du plan de l'ouverture supérieure 8 à la zone de jonction 34 de la charnière latérale 22 et est relié à cette zone de jonction 34. Ainsi, la paroi 6 est interrompue à une hauteur inférieure en regard de chaque charnière latérale 22, par rapport au reste de la paroi 6, la partie s'étendant au-dessus de la zone de jonction 34 formant la partie de jonction 26 au cadre 2 de chaque charnière latérale 22.

La longueur de la charnière latérale 22 est augmentée par augmentation de la longueur de sa partie de jonction au cadre 26. En augmentant la longueur de la partie de jonction au cadre 2, l'encombrement de chaque charnière latérale 22 dans le canal de tir est le même que celui de la ou des charnières centrales 20, qui n'est pas gênant pour un bon déploiement du coussin gonflable. Cela ne serait pas le cas si la longueur de la charnière latérale était augmentée par augmentation de la longueur de la partie de déploiement de la charnière.

Sur la Fig. 4, on a représenté un espace 24 s'étendant entre une charnière centrale 20 et une charnière latérale 22. En regard de cet espace 24, la paroi 6 comprend une zone affinée 38, d'épaisseur inférieure à l'épaisseur du reste de la paroi 6 et s'étendant de la zone de jonction 34 de chaque charnière latérale 22 au cadre 2 jusque dans le plan de l'ouverture supérieure 8, c'est-à-dire s'étendant en hauteur entre la zone de jonction 34 de chaque charnière latérale 22 au cadre 2 et la zone de jonction 32 de la ou des charnières centrales 20 au cadre 2. Cette zone affinée 38 permet de simplifier le moule d'injection du dispositif d'obturation 1, lorsque celui-ci est réalisé d'une seule pièce en matière plastique, en limitant l'angle de dépouille au niveau du décrochement 36 et en simplifiant ainsi le démoulage du dispositif d'obturation 1.

Le dispositif d'obturation 1 décrit ci-dessus permet d'améliorer la robustesse du couvercle 4 au niveau de la zone formant charnière 12 et d'éviter ainsi un risque d'arrachement du couvercle 4 par rapport au cadre 2. En outre, ce dispositif d'obturation est simple à réaliser et ne présente pas un encombrement plus important qu'un dispositif d'obturation classique.

## Revendications

1. Dispositif d'obturation (1) d'un module de coussin gonflable, du type comprenant un cadre (2), comprenant au moins une paroi (6) définissant une trajectoire de déploiement du coussin gonflable formant le canal de tir et une ouverture supérieure (8) s'étendant à l'extrémité de ladite paroi (6), et un couvercle (4) recouvrant au moins une partie de l'ouverture supérieure (8) et mobile par rapport au cadre (2) de sorte à dégager l'ouverture supérieure (8) et permettre le déploiement du coussin gonflable selon la trajectoire de déploiement au travers de l'ouverture supérieure (8), le couvercle (4) étant fixée à la paroi (6) par une zone formant charnière (12), la zone formant charnière (12) comprenant au moins une charnière centrale (20) reliant une partie centrale du couvercle (4) au cadre (2), et au moins une charnière latérale (22) reliant une partie latérale du couvercle (4) au cadre (2), la charnière latérale (22) présentant une longueur supérieure à la longueur de la charnière centrale (20), la charnière centrale (20) et la charnière latérale (22) comprenant chacune une partie de jonction au cadre (26), une partie de déploiement (30) et une partie de jonction au couvercle (28), **caractérisé en ce que** la partie de déploiement (30) s'étendant à l'intérieur du canal de tir et la partie de jonction (26) s'étendant au droit de la paroi (6), la longueur de la partie de jonction au cadre (26) de la charnière latérale (22) étant supérieure à la longueur de la partie de jonction au cadre (26) de la charnière centrale (20).

2. Dispositif d'obturation selon la revendication 1, **caractérisé en ce que** le cadre (2), le couvercle (4) et la zone formant charnière (12) sont réalisés d'une seule pièce.

3. Dispositif d'obturation selon la revendication 1 ou 2, **caractérisé en ce que** le cadre (2) comprend une partie de fixation (10) à un support, ladite partie de fixation (10) s'étendant autour de l'ouverture supérieure (8) sensiblement dans le plan de ladite ouverture supérieure (8) et étant fixée à la paroi (6).

4. Dispositif d'obturation selon la revendication 3, **caractérisé en ce que** la charnière centrale (20), la paroi (6) et la partie de fixation (10) se rejoignent en une zone de jonction (32) s'étendant sensiblement dans le plan de l'ouverture supérieure (8).

5. Dispositif d'obturation selon la revendication 3 ou 4, **caractérisé en ce que** la charnière latérale (22), la paroi (6) et la partie de fixation (10) se rejoignent en une zone de jonction (34) s'étendant sensiblement dans un plan décalé par rapport au plan de l'ouverture supérieure (8), de sorte à augmenter la longueur de la charnière latérale (22).

6. Dispositif d'obturation selon la revendication 5, **caractérisé en ce que** la partie de fixation (10) comprend un décrochement (36) en regard de la charnière latérale (22), ledit décrochement (36) s'étendant sensiblement du plan de l'ouverture supérieure (8) à la zone de jonction (34) de la charnière latérale (22) à la paroi (6) et à la partie de fixation (10), ledit décrochement (36) étant relié à ladite zone de jonction (34).

7. Dispositif d'obturation selon l'une quelconque des revendications 1 à 6, **caractérisé en ce que** les parties de déploiement (30) de la charnière centrale (20) et de la charnière latéral (22) présentent chacune une section sensiblement en forme de U.

8. Dispositif d'obturation selon l'une quelconque des revendications 1 à 7, **caractérisé en ce que** la charnière centrale (20) et la charnière latérale (22) sont séparées l'une de l'autre par un espace (24), le couvercle (4) n'étant pas relié à la paroi (6) en regard de cet espace (24).

9. Dispositif d'obturation selon la revendication 8, **caractérisé en ce que** la paroi (6) comprend une zone affinée (38) s'étendant en regard de l'espace (24) jusque dans le plan de l'ouverture supérieure (8).

10. Dispositif d'obturation selon l'une quelconque des revendications 1 à 9 **caractérisé en ce que** le couvercle (4) est relié au cadre (2) par au moins une charnière centrale (20) et par deux charnières latérales (22), lesdites charnières latérales (22) étant disposées de part et d'autres de ladite charnière centrale (20).

## Patentansprüche

1. Verschlussvorrichtung (1) für ein aufblasbares Kissenmodul des Typs, der einen Rahmen (2), der wenigstens eine Wand (6) aufweist, die eine Entfaltungsbahn des aufblasbaren Kissens, die den Schusskanal bildet, und eine obere Öffnung (8), die sich zum Ende der Wand (6) erstreckt, definiert, und einen Deckel (4), der wenigstens einen Teil der oberen Öffnung (8) abdeckt und in Bezug auf den Rahmen (2) in der Weise beweglich ist, dass er die obere Öffnung (8) freigibt und die Entfaltung des aufblasbaren Kissens längs der Entfaltungsbahn durch die obere Öffnung (8) hindurch ermöglicht, umfasst, wobei der Deckel (4) an der Wand (6) über eine ein Scharnier (12) bildende Zone befestigt ist, wobei die ein Scharnier (12) bildende Zone wenigstens ein Mittelscharnier (20), das einen Mittelteil des Deckels (4) mit dem Rahmen (2) verbindet, und wenigstens ein Seitenscharnier (22), das einen Seitenteil des Deckels (4) mit dem Rahmen (2) verbindet, umfasst, wobei das Seitenscharnier (22) eine Länge aufweist, die größer als die Länge des Mittelscharniers (20) ist, wobei das Mittelscharnier (20) und das Seitenscharnier (22) jeweils einen Verbindungsteil (26) mit dem Rahmen, einen Entfaltungsteil (30) und einen Verbindungsteil (28) mit dem Deckel umfassen, **dadurch gekennzeichnet, dass** der Entfaltungsteil (30) sich in den Schusskanal erstreckt und der Verbindungsteil (26) sich zu dem Ort der Wand (6) erstreckt, wobei die Länge des Teils (26) für die Verbindung mit dem Rahmen des Seitenscharniers (22) größer als die Länge des Teils (26) für die Verbindung mit dem Rahmen des Mittelscharniers (20) ist.

2. Verschlussvorrichtung nach Anspruch 1, **dadurch gekennzeichnet, dass** der Rahmen (2), der Deckel (4) und die ein Scharnier (12) bildende Zone einteilig verwirklicht sind.

3. Verschlussvorrichtung nach Anspruch 1 oder 2, **dadurch gekennzeichnet, dass** der Rahmen (2) einen Teil (10) für die Befestigung an einem Träger umfasst, wobei sich der Befestigungsteil (10) um die obere Öffnung (8) im Wesentlichen in der Ebene der oberen Öffnung (8) erstreckt und an der Wand (6) befestigt ist.

4. Verschlussvorrichtung nach Anspruch 3, **dadurch gekennzeichnet, dass** sich das Mittelscharnier (20), die Wand (6) und der Befestigungsteil (10) in einer Verbindungszone (32) vereinigen, die sich im Wesentlichen in der ebenen Öffnung (8) erstreckt.

5. Verschlussvorrichtung nach Anspruch 3 oder 4, **dadurch gekennzeichnet, dass** sich das Seitenscharnier (22), die Wand (6) und der Befestigungsteil (10) in einer Verbindungszone (34) vereinigen, die sich im Wesentlichen in einer Ebene erstreckt, die zu der Ebene der oberen Öffnung (8) versetzt ist, derart, dass die Länge des Seitenscharniers (22) erhöht ist.

6. Verschlussvorrichtung nach Anspruch 5, **dadurch gekennzeichnet, dass** der Befestigungsteil (10) einen Rücksprung (36) in Bezug auf das Seitenscharnier (22) umfasst, wobei sich der Rücksprung (36) im Wesentlichen von der Ebene der oberen Öffnung (8) zu der Verbindungszone (34) des Seitenscharniers (22) zu der Wand (6) und zu dem Befestigungsteil (10) erstreckt, wobei der Rücksprung (36) mit der Verbindungszone (34) verbunden ist.

7. Verschlussvorrichtung nach einem der Ansprüche 1 bis 6, **dadurch gekennzeichnet, dass** die Entfaltungsteile (30) des Winkelscharniers (20) und des Seitenscharniers (22) jeweils einen im Wesentlichen U-förmigen Querschnitt aufweisen.

8. Verschlussvorrichtung nach einem der Ansprüche 1 bis 7, **dadurch gekennzeichnet, dass** das Mittelscharnier (20) und das Seitenscharnier (22) voneinander durch einen Zwischenraum (24) getrennt sind, wobei der Deckel (4) gegenüber diesem Zwischenraum (24) nicht mit der Wand (6) verbunden ist.

9. Verschlussvorrichtung nach Anspruch 8, **dadurch gekennzeichnet, dass** die Wand (8) eine verdünnte Zone (38) umfasst, die sich gegenüber dem Zwischenraum (24) bis zu der Ebene der oberen Öffnung (8) erstreckt.

10. Verschlussvorrichtung nach einem der Ansprüche 1 bis 9, **dadurch gekennzeichnet, dass** der Deckel (4) mit dem Rahmen (2) durch wenigstens ein Mittelscharnier (20) und zwei Seitenscharniere (22) verbunden ist, wobei die Seitenscharniere (22) beiderseits des Mittelscharniers (20) angeordnet sind.

## Claims

1. An obturation device (1) for an airbag module, of the type comprising a frame (2), comprising at least one wall (6) defining a deployment trajectory of the airbag forming the shooting canal and an upper aperture (8) extending at the end of said wall (6), and a lid (4) covering at least one portion of the upper aperture (8) and movable relatively to the frame (2) so as to clear the upper aperture (8) and allow deployment of the airbag along the deployment trajectory through the upper aperture (8), the lid (4) being attached to the wall (6) through a hinge-forming area (12), the hinge-forming area (12) comprising at least one central hinge (20) connecting a central portion of the lid (4) to the frame (2), and at least one side hinge (22) connecting a side portion of the lid (4) to the frame (2), the side hinge (22) having a greater length than the length of the central hinge (20), the central hinge (20) and the side hinge (22) each comprising a frame-joining portion (26), a deployment portion (30) and a lid-joining portion (28), **characterized in that** the deployment portion (30) extends inside the shooting canal and the frame-joining portion (26) extending upright the wall (6), the length of the frame-joining portion (26) of the side hinge (22) being greater than the length of the frame-joining portion (26) of the central hinge (20).

2. The obturation device according to claim 1, **characterized in that** the frame (2), the lid (4) and the hinge-forming area (12) are made in one single piece.

3. The obturation device according to claim 1 or 2, **characterized in that** the frame (2) comprises a portion (10) for attachment to a support, said attachment portion (10) extending around the upper aperture (8) substantially in the plane of said upper aperture (8) and being attached to the wall (6).

4. The obturation device according to claim 3, **characterized in that** the central hinge (20), the wall (6) and the attachment portion (10) join up in a junction area (32) substantially extending in the plane of the upper aperture (8).

5. The obturation device according to claim 3 or 4, **characterized in that** the side hinge (22), the wall (6) and the attachment portion (10) join up in a junction area (34) substantially extending in a plane shifted relatively to the plane of the upper aperture (8), so as to increase the length of the side hinge (22).

6. The obturation device according to claim 5, **characterized in that** the attachment portion (10) comprises a discontinuity (36) facing the side hinge (22), said discontinuity (36) substantially extending from the plane of the upper aperture (8) to the area (34) for joining the side hinge (22) to the wall (6) and to the attachment portion (10), said discontinuity (36) being connected to said junction area (34).

7. The obturation device according to any of claims 1 to 6, **characterized in that** the deployment portions (30) of the central hinge (20) and of the side hinge (22) each have a substantially U-shaped section.

8. The obturation device according to any of claims 1 to 7, **characterized in that** the central hinge (20) and the side hinge (22) are separated from each other by a gap (24), the lid (4) not being connected to the wall (6) facing this gap (24).

9. The obturation device according to claim 8, **characterized in that** the wall (6) comprises a thinned area (38) extending facing the gap (24) as far as in the plane of the upper aperture (8).

10. The obturation device according to any of claims 1 to 9, **characterized in that** the lid (4) is connected to the frame (2) through at least one central hinge (20) and through two side hinges (22), said side hinges (22) being positioned on either side of said central hinge (20).
